# EUROPEAN PATENT APPLICATION

(11) **EP 2 472 470 A2**
(43) Date of publication of application: **04.07.2012**
(21) Application number: 11181226.9
(22) Date of filing: 14.09.2011
(51) Int. Cl.: G06T 7/00

(54) **System, method & computer program for presenting an automated assessment of a sample's response to external influences**

(30) Priority: 15.09.2010 US 383180 P; 04.10.2010 US 389521 P
(71) Applicant: MBT Technology LLC, Groton, CT 06340 (US)
(72) Inventor: Torres, Leef Manuel, Groton, CT 06385 (US); Wood, Thomas Ryan, Bristol BS8 4EJ (GB)
(74) Representative: Browne, Robin Forsythe

(57) **Abstract**

A sample, such as biological sample, is evaluated by an automated apparatus (200) that operates to identify one or more areas of interest (302, 304) within the sample. Each area of interest (302, 304) has a classifiable appearance brought about from the sample's interaction with an external influence under investigation. The apparatus classifies each area of interest (302, 304) by automatically resolving and identifying either the existence of an abnormal feature (320, 322) in that area of interest or a lack of any abnormality in that area of interest. An abnormal feature (320, 322) qualified as differentiable (e.g. in a reference data base) from a control reference unaffected by the external influence by at least one of: shape; area; size; and proximity to other resolved features within the area of interest. The apparatus counts incidences of abnormal features within each area of interest and automatically presents an assessment of the effect of the external influence on the sample based at least in part on the count of abnormal features.

## Description

### FIELD OF THE INVENTION

The present invention relates, in one arrangement, to a system and method of assessing drug efficacy or exposure-response and is particularly, but not exclusively, applicable to an image capture and computerized assessment system and methodology that operates to allow identification and differentiation ("field counts") of potentially micronucleated cells on a sector-by-sector and aggregated basis within an individual sample, such as within a dose well. Broader aspects of the invention find more general application in the analysis of areas of interest within a sample, each area of interest having a classifiable appearance brought about from the sample's interaction with an external influence under investigation, e.g. mechanical properties arising from exposure of a component to heat and/or pressure.

### BACKGROUND OF THE INVENTION

Evaluation of drug efficacy is an expensive process. Once a candidate compound has been identified through research and development, the compound initially undergoes some form of assay in a laboratory-controlled environment, with the assay producing a "drug-response" or "exposure-response" relationship for evaluation. The assay describes the change in effect on a sample, such as an organism, caused by differing levels of exposure (or "doses") to a "stressor" or "agonist" (i.e., a drug, hormone or reagent that causes a measureable clinical response) given a predetermined exposure time and/or specific condition.

The terms relating to "stressor" and "agonist" are used interchangeably and are limiting only to the extent that they describe the product under evaluation. Unless the specific context requires a specific interpretation, the terms "drug" and "dose" should be broadly understood to be a product (and generally a pharmacological stressor) that brings about a measureable clinical response in a sample.

Studying dose responses, and developing dose response models ("dose response curves"), is central to determining safe and hazardous levels and dosages for drugs, potential pollutants and other substances to which humans or other organisms are exposed. These conclusions are often the basis for public policy, and a precursor to more extensive (e.g. in-vitro) testing and regulatory approval. Quantifying the dose response in an effective and efficient process is therefore extremely important.

Generally, to produce and evaluate a dose response for a new drug, a tray of sample "wells" is manufactured. Generally, the wells are set out in an x-y linear array and, more usually, a matrix. Each sample well contains, as the name suggested, a measured quantity of sample together with the stressor. The concentration or dose of stressor is then varied from left to right across each row in the tray, with the concentration typically varied on a logarithmic scale of multiplying factors, i.e. x1, x3, x10, x30; x100 and so on. Typically, each row will contain between ten and twenty wells of different doses of stressor. The measured reaction or response to the stressor in each sample in each well is then recorded. The sample, without limitation but by way of example, may be an individual organism or a population or culture of live cells or live tissue. It is noted, in passing, that biologic variation (i.e. variation in magnitudes of response among test subjects in the same population given the same dose of drug) can also occur, so duplicate wells may also be produced.

The reaction or response in each well might reasonably be enzyme activity, accumulation of an intracellular second messenger, membrane potential, secretion of a hormone, muscle contraction or either cell death and/or cell mutation. Cell death and/or cell mutation caused by a genotoxin (e.g. a toxic composition of a stressor or particular concentration of stressor) can be associated, for example, with the presence or absence of bio-mass outside of the nucleus but within the cytoplasm of a cell. Ejected bio-mass is often termed "micronucleated" material since it emanates from the nucleus of the cell, especially during mitosis (i.e. cell-division). Conversely, a healthy cell is "mononucleated".

A detailed understanding of the exact effects is beyond the need of the skilled person in the context of this invention, but the reader may wish to refer to the general subjects of *Pharmacokinetics* and *Pharmacodynamics* (should they be so inclined). Essentially, pharmacodynamics describes what a drug does to the body, involves receptor binding, post-receptor effects and chemical interactions, whereas drug pharmacokinetics determines the onset, duration and intensity of a drug's effect. But regardless of how a drug effect occurs-through binding or chemical interaction — the concentration of the drug at the site of action controls the effect. However, response to concentration may be complex and is often nonlinear. The relationship between the drug dose, regardless of route used, and the drug concentration at the cellular level is even more complex.

Graphing dose-responses to produce dose response curves for drugs, hormones or other treatment delivery systems studied under controlled conditions can therefore help compare the pharmacologic profiles of such drugs, although the accuracy of the evaluation of each well is also defining factor. This graphing information helps determine the dose necessary to achieve the desired effect. Dose-response curves therefore assist in determining the required dose and frequency as well as the therapeutic index for a drug in a population. [The therapeutic index (i.e. the ratio of the minimum toxic concentration to the median effective concentration) helps determine the efficacy and safety of a drug, as will be understood].

Dose-response data are typically graphed with the dose or dose function (e.g., log₁₀ dose) on the absissa (x-axis) and the measured effect (response) on the ordinate (y-axis). Because a drug effect is a function of dose and time, such a graph usually depicts the dose-response relationship independent of time. Measured effects are frequently recorded as maxima at time of peak effect or under steady-state conditions.

A standard dose-response curve is defined by four parameters: i) the baseline response; ii) the maximum (or top) response; iii) the slope of the curve; and iv) the drug concentration that provokes a response halfway between baseline and maximum, i.e. the EC50. Depending on the nature of the normalized data, the EC50 may not be the same as the concentration that provokes a response on the ordinate axis at y=50%. A *full agonist* is a drug that appears able to produce the full tissue/sample response, whereas a *partial agonist* is a drug that provokes some response between a baseline and the full response.

By way of further limited explanation and to provide context only, many steps can occur between the binding of the agonist to a receptor and the production of the response. Therefore, dose-response curves can have almost any shape that is dependent on the drug that is used, the applied conditions (e.g. temperature, pressure, voltage and time) and the response that is measured. However, in very many systems, dose-response curves follow a hyperbolic function if plotted with a linear scale, or a sigmoid (S-shaped) curve with a slope factor of 1.0 if plotted as a semi-log graph. In most cases, the dose-response curve moves uphill from low concentrations to higher concentrations, although the rate of change may vary. Some dose-response curves, however, are steeper or shallower than the standard curve. The steepness is quantified by the "Hill slope" or "slope factor". Evaluation may also use of single concentration of agonist and varying concentrations of antagonist to vary the gradient and/or inclination of the response curve.

Now, with respect to the quantified analysis of the reaction/response of the sample to the stressor under varying dose conditions, there are two general forms of evaluation.

In a first process, each well is viewed in turn by an expert technician/scientist armed with one or more hand tally counter(s); these devices are sometimes referred to as "clickers" and the process referred to as "gross examination" or "grossing". The technician looks at the response of each cell in the well and uses the hand tally counter to increment a count thereon to reflect a relative count between micronucleated cells and healthy cells in the entire well. This visual analysis is both painstaking and tedious and often subject to errors arising from the ability of the technician firstly to resolve optically micronucleated cells from healthy cells and then, secondly, to maintain concentration on what has been counted and what hasn't. Use of a microscope improves resolution (and is often indispensible), although excessive magnification can itself render a current field of view out of context with respect to the entire well that is made up from multiple individual fields of view acquired from re-positioning of the tray.

If the technician loses count or position or fails to evaluate correctly a cell or sample trait, the evaluation of the drug response is compromised because the ratio of (for example) healthy to micronucleated cells is not accurately recorded; this can have severe clinical consequences. In any event, the skills of an expert technician are not easily acquired and, consequently, the expert technician provides their services at a premium price.

A similar gross examination analysis is performed in pathology and especially *histopathology.* In this analytical process, specimens are similarly inspected with the bare eye (although generally with the limited aid of a microscope) to obtain systemic diagnostic information. However, rather than making use of drug wells, it will be appreciated that pathology will generally make use of microscopic analysis of histological slides.

To assist in imaging, resolution and identification of structures, slides or wells may be subjected to a chemical fixation or freezing process, as is understood by the skilled addressee. Particularly, to enhance differentiation, the samples under evaluation may be stained with one or more pigments to reveal cellular components, whilst counterstains are used to provide contrast. In a process called immunohistochemistry, antibodies have been used to stain particular proteins, lipids and carbohydrates to greatly increase the ability to specifically identify categories of cells under a microscope. Other advanced techniques include in situ hybridization are used to identify specific DNA or RNA molecules. In general, staining methods are supplementary to, or augment the use of, digital cameras to capture histopathological images.

In a second prior art process that evaluates reaction/response, the quantitative assessment of has been fully automated through the use of a computerized recognition technique. Using "blob" analysis, a computer system is configured to be responsive to optical data recovered from the optical scanning and analysis of each well. The computer system then provides an absolute output for each well, which output is an absolute number reflecting (for example) a computer-assessed ratio between healthy and micronucleated cells. Whilst such a computer-based process takes out the tedium and potential for a lapse in concentration, it has been recognized that uncertainty still remains about presented results and that the system's effectiveness is restricted to the resolution and capture capabilities of the optics and the underlying robustness of the program algorithms.

In both cases, the assessed ratio within the sample of acceptable to not acceptable (e.g. healthy to micronucleated cells) is used to produce drug-response curves (as described above) across a range of stressor concentrations and/or potentially different environmental conditions.

In terms of technical implementation, computer "blob" analysis makes use of a charge-coupled device (CCD) camera which is designed to convert optical brightness into electrical amplitude signals using a plurality of CCD_{S}, and then reproduce the image of a subject using the electric signals without time restriction. When used in image applications, the charge collected and stored by each semiconductor gate of a semiconductor array represents a picture element or pixel of an image. A CCD image sensor includes an image sensing section (which performs photoelectric conversion) and a storage section (which is arranged separate from the image sensing section and temporarily stores charges acquired by the photoelectric conversion). The CCD camera is therefore mounted into the optical path of, typically, a microscope that is successively focused on different drug wells in a tray. Captured image data is then provided, via a suitable connection, to a computer for analysis by a computer program.

A typical (and suitable) CCD digital camera is the Microcast^{®} HD camera produced by Optronics^{®} Corporation of Goleta, California. The Microcast^{®} HD camera is a full high-definition medical grade camera system that offers a 2-megapixel, progressive scan image at 60 frames per second in imaging applications, including photomicroscopy.

With respect to the processing of CCD captured data and the imaging, measuring and analysis of data by computers, the skilled addressee currently has access to such programs as Longboard™ (again supplied by Optronics® Corporation of Goleta, California). Longboard™ supports automatic detection and counting of objects and also size functions. As will be understood, such computer programs support the automatic calculation of pixels-per-unit values, with this representing forms of blob analysis based on area. Also, it is known for such analysis programs to support "image stitching", wherein a composite image is created from multiple individual pictures thereby producing an extended field of view at a given magnification. Also, it is known for such analysis programs to support an automatic edge detection algorithm that performs an auto trace measurement function around an object. Micronucleates may therefore be inferred, for example but without limitation, by proximity of the micronucleus to the macronucleus or otherwise based on an overall area for the micronucleus relative to a mononucleated cell, combination of both of these measurements or other techniques known in the art.

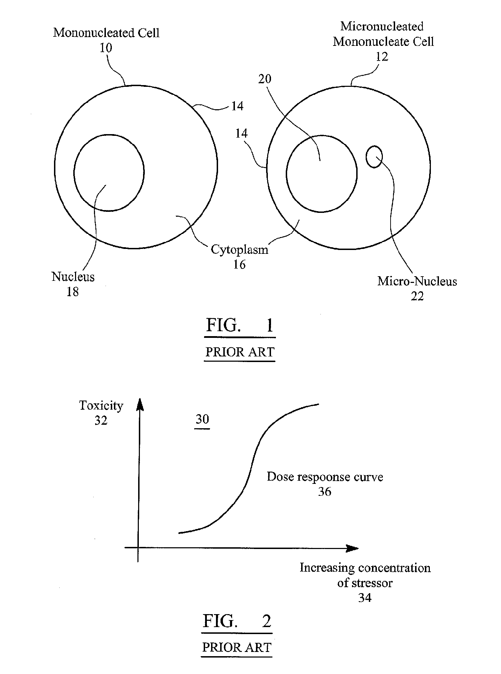

Referring to FIG. 1, there is shown a prior art schematic illustration of typical cells, including a healthy mononucleated cell 10 and a micronucleated cell 12. The representation illustrates some principle traits that an analysis program of the present invention may look to identify, although the skilled person will appreciate that other traits may be used to identify a drug or exposure response in a cell and that the representation omits high levels of cell detail, e.g. the presence of mitochondria, ribosomes and details of the nucleolus. Essentially, both cells 10 and 12 include a plasma membrane 14 that surrounds cytoplasm 16. In the case of the mononucleated cell 10, a whole nucleus 18 is located with the molecular soup that is the cytoplasm 16. In the micronucleated cell 12, a macronucleus 20 is accompanied by a secondary and smaller micronucleus 22 of ejected nuclear material. The micronucleus 20 is generally proximate or attached to the macronucleus, as will be readily understood by a skilled analytical technician. The macronucleus 20 is therefore inferior in cellular make-up to the nucleus 18 of the healthy, mononucleated cell 10. The micronucleus 22 is therefore indicative of unhealthy or dead nuclear material and is realised by a small nucleus that forms whenever a chromosome or a fragment of a chromosome is not incorporated into one of the daughter nuclei during cell division.

FIG. 2 is a prior art representation of a typical dose-response or exposure-response function plotted on a graph of, for example, toxicity 32 against stressor concentration 34. A dose response curve 36 plots an observed relationship based, for example, on the identification and determination of a ratio between mononucleated and micronucleated cells, as previously described and as will be readily understood by a person of ordinary skill in the art.

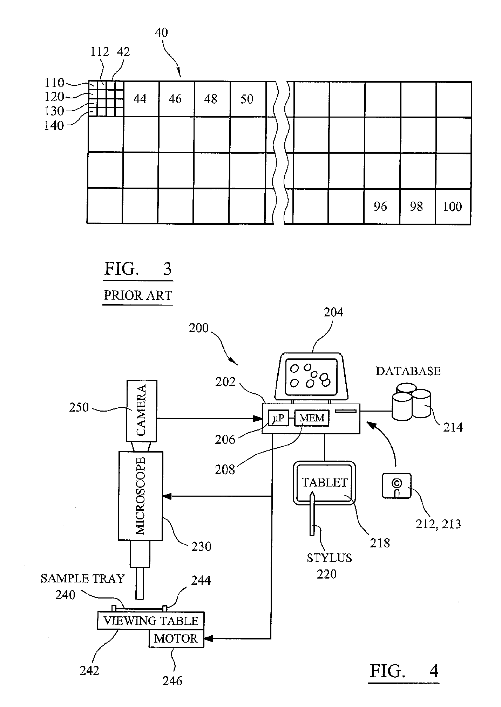

FIG. 3 is a schematic representation of a tray 40 of drug wells 42-100 used in the prior art. For the sake of clarity, only certain of the drug wells in the matrix of the tray 40 are labelled. The tray 40 is also used as an exemplary mechanism for supporting samples under test, and other vehicles (including individual slides) may be used, as is customary in the art. Each well 42-100 includes a sample (not shown) and a known concentration of agonist and, potentially, antagonist (not shown). Again, the form of the tray 40 and its preparation are not unusual and they are prepared in accordance with known clinical techniques, as will readily be understood.

Each well 42-100 in the tray 40 is nominally sub-divided into sectors that can be individually scanned by a microscope and camera to produce individual images that can be stitched together to produce a full picture of activity/response within the well. Well 42 is shown to contain sixteen scannable sectors 110-140 in a 4x4 matrix. In reality, the sectors 110-140 are differentiated from only another by the alignment of an optical path and related (but predetermined) field of view. Each sector 110-140 may contain a varying amount of sample and a varying amount of stressor, with the distribution of sample within both the sectors and wells being random in nature. The number of scannable sectors is arbitrary and is set according to desired resolution and the capabilities of the optical evaluation system.

### SUMMARY OF THE INVENTION

According to a first aspect of the invention there is provided a method of analyzing a sample, the method comprising: identifying one or more areas of interest within the sample, each area of interest having a classifiable appearance brought about from the sample's interaction with an external influence under investigation; classifying each area of interest by automatically resolving and identifying either the existence of an abnormality in that area of interest or a lack of any abnormality in that area of interest, an abnormality in an area of interest differentiable from that of a control reference unaffected by the external influence by at least one of: shape; area; size; movement of a feature over time; ; a change in colour; change in a feature over time; and proximity to other features within the area of interest; counting the incidences of abnormalities within each area of interest; and presenting an assessment of the effect of the external influence on the sample based at least in part on the count of abnormalities in the areas of interest.

In a second aspect of the invention there is provided a computer program product arranged or configured to present as a visual output a quantitative analysis of a sample, the computer program product including code that, when run by a processor, is arranged to: identify and select one or more areas of interest within the sample; image process each selected area of interest; automatically resolve features within each selected area of interest to at least one capture image; classify each feature in each area of interest by automatically resolving and identifying either the existence of abnormality in that feature or a lack of any abnormality therein, wherein classification is based upon an appearance of each of said features as brought about from the sample's interaction with an external influence under investigation and wherein an abnormal feature is differentiable from a control reference unaffected by the external influence by at least one of: shape; area; size; movement of a feature over time; a change in colour; change in a feature over time; and proximity to other resolved features within the area of interest; count the incidences of abnormal features within each area of interest; and present as the visual output an assessment of the effect of the external influence on the sample based at least in part on the count of abnormal features in the areas of interest. Those skilled in the art will recognize that embodiments of the invention can also include a computer readable medium having computer readable instructions stored thereon for execution by a processor to perform methods as described herein. A computer or machine readable medium includes but is not limited to a medium capable of storing data in a machine readable format that can be accessed by an automated sensing device and capable of being turned into some form of binary code or the like. Examples of machine readable media include magnetic disks, magnetic cards, magnetic tapes and magnetic drums as well as punched cards and paper tapes, optical disks, barcodes and magnetic ink characters. Thus, further embodiments of the invention can also be used with both machine readable data storage and data transmission technologies for enabling information to be retrieved by any form of energy.

In yet a further embodiment of the invention there is provided apparatus arranged to image and automatically resolve and classify features within a sample, the apparatus comprising: an imaging system arranged or configured to capture and process, in use, images of features within at least one selectable area of interest within a sample; a processor arranged or configured: automatically to resolve and classify features in each area of interest by identifying either the existence of abnormality in that feature or a lack of any abnormality therein, wherein classification is based upon an appearance of each of said features as brought about from the sample's interaction with an external influence under investigation and wherein an abnormal feature is differentiable from a control reference unaffected by the external influence by at least one of: shape; area; size; movement of a feature over time; a change in colour; change in a feature over time; and proximity to other resolved features within the area of interest; count the incidences of abnormal features within each area of interest; and a display, responsive to the processor, for presenting as a visual output an assessment of the effect of the external influence on the sample based at least in part on the count of abnormal features in the areas of interest.

Advantageously, the present invention permits drug efficacy to be evaluated more quickly and accurately given the increased resolution provided in relation to specific test wells containing specific dose concentrations. More particularly, the present invention supports a refinement in the accuracy of individual field counts in the context of individual dose wells (that may themselves be sectorized), thereby permitting the time-efficient generation of dose response curves having increased accuracy. Beneficially, increased accuracy arises from a combination of higher clinical certainty and the ability to re-evaluate clinically and re-classify any specific areas or images that give rise for probable concern within a well.

According to another aspect of the present invention there is provided a computer program or computer program product that functions to control the collection and display of data and/or images from identified areas of interest from within a well or portion of a prepared slide or sealed cassette. The program furthermore permits a skilled reviewer individually to ascribe a result to field images identified by the program as being indeterminate or problematic, whereby a dose responsive curve (or its clinical equivalent) is automatically modified to reflect the ascribed result from such targeted reviewer analysis. These and other features, objects and advantages of the present invention will become apparent upon reading the following description thereof together with reference to the accompanying drawings.

### BRIEF DESCRIPTION OF THE DRAWINGS

Exemplary embodiments of the present invention will now be described with reference to the accompanying drawings in which:
FIG. 1 is a prior art schematic illustration of typical cells, including a healthy cell and a micronucleated cell;
FIG. 2 is a representation of a typical dose-response or exposure-response curve of the prior art;
FIG. 3 is a prior art schematic representation of a tray of drug wells;
FIG. 4 is a block diagram of an evaluation system according to an embodiment of the present invention;
FIG. 5 is a representation of an output from a display of the system of FIG. 4, the display showing captured images of typical sample cells; and
FIG. 6a to FIG. 6e is an exemplary operating methodology used within the system of FIG. 4.

### DETAILED DESCRIPTION

For the sake of explanation only, the concepts underlying the present invention will be described in the context of cellular responses and cells, although the nature of the sample undergoing drug or treatment evaluation/response can be varied.

FIG. 4 illustrates a block diagram of an evaluation system 200 according to an embodiment of the present invention. The evaluation system 200 includes a computer 202 having a display 204. The display 204 incorporate touch-screen functionality, but this is optional, and is arranged to present images or samples, portions of samples or results. The computer 202 contains a processor 206 for controlling operation of the system (as a whole), e.g. by executing program code that is stored locally in memory 208. The program code may be supplied as a computer program product 210, such as on (without limitation) a CD ROM 212 or memory stick containing a computer program 213. The computer 202 may further be coupled to a database 214 that stores program data or test results. Indeed, the database 214 may, in one embodiment, represent a server containing centralized program code for execution by the computer 202. The computer is also provided with an input device 218 for allowing the selection of program functions and the input or selection of data. The input device 218 may be a computer tablet having an input stylus 220 or the like, or the input device could be a conventional keyboard and mouse assembly.

The computer 202 is coupled to an optical system or scanner, such as a microscope 230 or camera, configured to capture sample data. The microscope 230 (or the like, as the case may be) is arranged to permit a user to examine exposure-responses in a sample or samples presented on a sample tray 240 or the like. The nature of the sample tray 240 has been discussed above in relation to FIG. 3. Generally, the sample tray 240 is located on some form of examination or viewing table 242 that contains a retainer or clip 244 that temporarily fixes the sample tray 240 in place. The viewing table 242 (and/or the retainer, as the case may be) may be moveable either under the control of the user, or otherwise (and preferably) under the control of a motor 246 responsive to the processor 206. The microscope 230 includes an optical path that this selectively aligned, during use, with regions or portions of the sample. In this way, a sample located in a drug well can be analysed on a sector-by-sector basis, as shown and explained in relation to drug well 42 of FIG. 3. The optical path also includes a CCD camera 250 that can capture images of each sector or well under the control of the processor 202 and computer program 213.

Captured sample data may be acquired using other analogous imaging techniques and process, as will be appreciated. Captured images of the sample (or portions of each sample) are stored either locally (in memory 208) of the computer evaluation system 200 or in the database 214, whereafter further processing of the captured images can be undertaken by the processor 202. Captured images can be selectively displayed on the display 204, which display may be automatic or under the control of an expert user. Upon request, the software program can calculate and present drug-response or exposure-response curves on the display, which calculated curves can be printed (if desired) or otherwise distributed, e.g. as an attachment to an e-mail sent from the computer 202 to a third party computer at a remote location.

The CCD camera may be based, for example, on the aforementioned Microcast^{®} HD camera system, with the computer program based (in part) on the aforementioned Longboard™ image processing and evaluation software (or its functional equivalent). However, unlike the prior art, an embodiment of the present invention augments the functionality of the evaluation software by allowing refinement of captured data; this results in an overall improvement in system resolution and reliability.

For the sake of clarity of the drawings, interconnections between the computer system 200 and a network (such as a LAN or WAN) has not been shown. It will, however, be appreciated that the computer evaluation system (200) could, at least to some extent, be remotely controlled from a remote site. For example, the specific evaluation of captured images and results need not occur at the computer 202, but may instead be routed and presented elsewhere (as will become apparent).

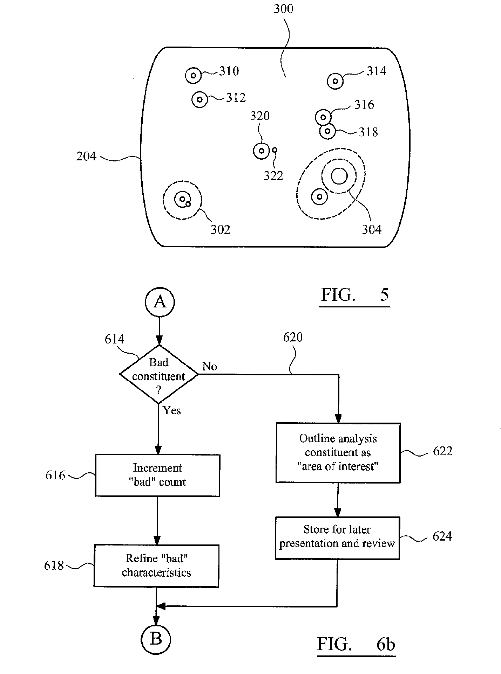

Referring briefly to FIG. 5, a captured image 300 containing areas of interest 302-304 shown on the display 204. The captured image 300, in one embodiment, may be either a composite view made up from multiple contiguous images of sectors or otherwise a single sector of multiple sectors (as exemplified in drug well 42 of FIG. 3). Indeed, the composite view may be an entire drug well or sample slide, or may only be a portion thereof. The degree of magnification with the optical aspect of the system is user selectable and is sufficient to permit, as required, visual analysis by an expert eye. Magnification can be either optically produced and/or digitally enhanced.

In FIG. 5, by way of explanatory example, the captured image 300 shows a variety of cells within a sample that has been subjected to a stressor or combination of agonist and antagonist designed, or at least believed, to induce an exposure- or drug-response. Some of the cells are mononucleated, e.g. cells 310-318. Indeed, some of the cells may be undergoing conventional and acceptable mitosis, e.g. cells 316 and 318. However, some of the cells have a reaction or response that is indeterminate in that the captured image cannot be processed to resolve the response one way or the other. These indeterminate regions are termed the "areas of interest" 302-304 since the computer program is unable to resolve the exposure or drug response given expected cell characteristics pre-programmed into the computer program. In other words, the computer program 213 includes code that allows the processor 202 to scan captured images and to categorize each image as being or containing a "good" cell or a "bad" cell (in the exemplary case of cell-based analysis), or otherwise to identify an area of interest for subsequent expert review. Identification may take the form of ringing the area of interest.

Areas of interest may arise because of the distribution of the cell across multiple focal planes in the sample. For example, since the cell has finite depth, only a portion of a healthy cell may be caught following pixel analysis. The imaging and identification process may not be able to resolve such depth to a satisfactory level. Alternatively, the contents with a cell may not be sharply resolved by the camera and may therefore present a cell in which a nucleus is apparently missing, such as in ringed area 304 of FIG.5. Alternatively, two closely adjacent blobs may be very closely sized, but may together represent a genetic mutation that does not fall easily into the standard pattern for micronucleated mutation. Automated classification by the process of the present invention is therefore preferably biased to identifying such areas of interest that may require further analysis or consideration.

The entire captured image is stored, with the image retrievable through a request input via the user interface, e.g. tablet or keyboard 218.

In terms of cell identification, the skilled person will appreciate that healthy cells can be differentiated from clearly unhealthy cells in a number of ways. For example, the aforementioned "blob" analysis technique looks to overall area of the cell (and therefore pixel analysis based on captured CCD values in the CCD array of the camera). If the area of the cell is within a given size range, then the cell may be considered healthy and a positive drug-response. Alternatively, the cell may need to have a particular size and include a number of particular computer-resolved features to be deemed healthy. Conversely, an unhealthy (e.g. micro-nucleated) cell, such as cell 320 and its companion bio-ejected micronucleate 322, might usually have a similar overall area to a healthy cell, but the micronucleate is located within a predetermined distance/radius from the cytoplasm membrane of the deformed parent cell or more usually as a secondary nucleus within the cytoplasm of a cell. When a second "blob" is: i) located with a predetermined distance of the parent cell and/or ii) has a predetermined difference in area and is also within a predetermined distance of a first "blob"; the combination/image is recognised by the processor 202 (and program 213) as being clearly unhealthy and therefore indicative of a negative drug-response. Thus, the grouping of cell features 320 and 322 would, according to one embodiment, not warrant further review on the basis that they can be clearly resolved as a negative drug-response; this cuts down review time.

Cell mutations may also give rise to cells having elongated structures resembling "comet" tails. Scanning of the captured image (and particularly areas of interest within the captured image) may thus look to identify such comet tails based on an overall length of the mutated cell. As will be appreciated, other physical measures (e.g. the amount of movement under the influence of electric charge or a discernible colour change) may be employed to determine comet tails and other mutated or suspect features.

The computer program thus functions to resolve features against a standard reference library, with resolution based on one or more of a number of physical attributes of the feature under investigation. For example, automatic or semi-automatic (in the case where an indeterminate result is obtained and the indeterminate results flagged, marked or identified for expert assessment) identification of "good" and "bad" features may be based on one or more of determined size, shape, area and/or proximity to other features within a given radius or distance.

"Good" and "bad" cells can therefore be ignored to the extent that their classification is clear and their respective results directly attributable to a positive count for good or bad cells, respectively, in a given sample in a particular environment under known conditions.

An embodiment of the present invention, however, identifies and tags areas of interest 302-304 that do not satisfy these rules or characteristics of "good" or "bad" to a satisfactory degree of certainty and functions to temporarily store these areas of interest without attributing a final response characteristic (e.g. incremental count value). According to one embodiment of the present invention, areas of interest are therefore selectively presented to a user for manual classification, with this manual classification allowing an overall count of "good" to "bad" cells to be revised. These areas of interest are preferably presented in the context of an entire sector, with the computer program "ringing" or otherwise highlighting on the display 204 each unclassified area of interest. Once an area of interest (and particularly a cell) has been categorised, the highlighting may change (e.g. from one colour to another) or may disappear entirely since a definitive determination has been attributed to the cell in that specific area of interest. Putting this differently, an embodiment of the present invention operates to filter out cells or samples that can be passed easily either one way of another, and instead focuses subsequent visual (expert) analysis and display on the identified areas of interest that require interpretation by the expert. The system therefore displays only the most relevant (marginal) data required both to refine the results and to produce an accurate drug-or exposure-response.

Returning briefly to the principle of "blob analysis", the skilled person will appreciate that this technique generally looks to identify and attribute a value for relative lightness/darkness (or chromatic range, if applicable based on the use of stains or markers) to pixels within a captured frame. A threshold level is used to define or scale each pixel to produce a relative value for lightness/darkness over an entire image. A pixel count of dark pixels therefore provides, for example, an area for the blob.

As an alternative assessment technique to "blob" detection, the computer evaluation system 200 may make use of a neural network-based (trained) classifier. In this form of detection, a database of what is acceptable/unacceptable is built up and refined/trained over time, with individual images then interpolated with respect to the database of values/characteristics to provide a result/classification. The principles of construction of a neural network-based system of analysis will be readily appreciated by the skilled addressee.

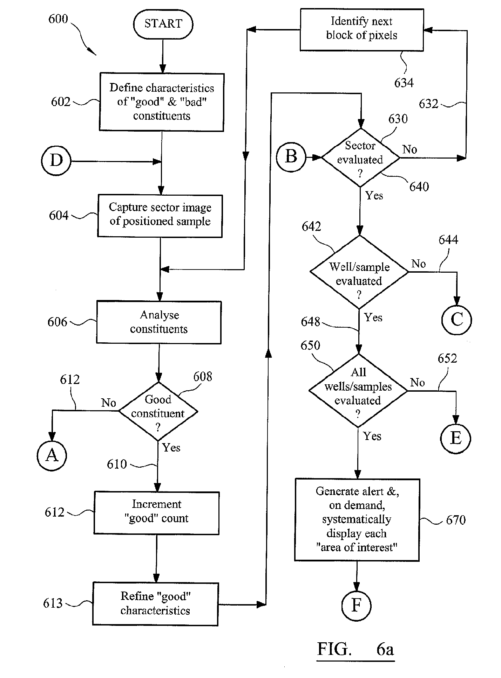

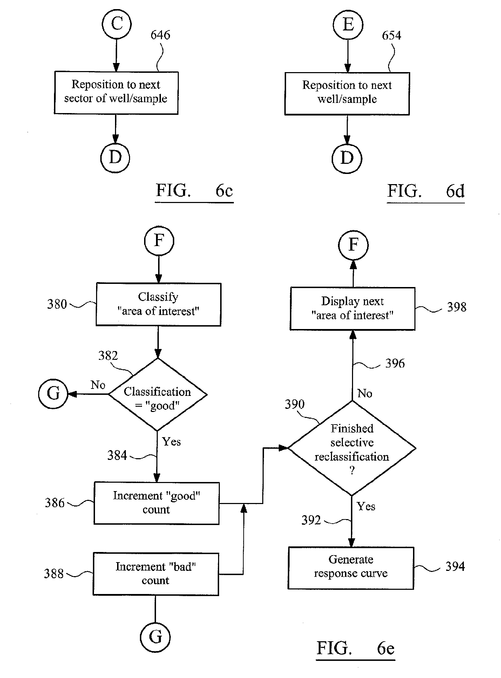

FIG. 6, composed of the various and interacting routines and sub-routines of FIGs. 6a to FIG. 6e, shows a process and operation 600 of the evaluation system of FIG. 4. Initially, at step 602, the expert user defines the characteristics that make up and constitute either a very clearly "good" or very clearly "bad" cell or sample, e.g. blob area and displacement between blobs. The difference between these definitions therefore represents a category of sample that is indeterminate and thus an "area of interest". The characteristics therefore vary according to the nature of the sample, as will be readily understood. Input of the characteristics may be directly at the computer, or the characteristics may be pre-programmed into bespoke code that is loaded into the computer 202 from the computer program product.

The sample is loaded into the sample tray (not shown) which is then appropriately positioned in the evaluation system 200 of FIG. 4. Once loaded, the optical system is aligned and an image captured and stored 604. The image is then broken down into pixels corresponding to constituent blocks that can be related to a single feature (e.g. the cytoplasm membrane, the nucleus, etc.,), with the program then able to apply the characteristics in an analysis mode 606 to try to resolve the nature of the constituent blocks. Of course, data capture may be commenced and finished before analysis begins, with this being a design option.

Once the constituents are grouped together, a determination 608 can be made as to whether each group of constituents represents a "good" constituent that substantially or preferably entirely corresponds to the expected "good" standard for that feature as stipulated by its programmed characteristics. In the affirmative 610, a "good" feature count is incremented 612. At this point, it may be desirable to automatically refine 613 what amount to a "good" characteristic, but this optional and dependent upon whether the system/program has an ability to learn.

At determination stage 608, in the negative 612, a determination 614 can subsequently be made as to whether each group of constituents represents a "bad" constituent that substantially or preferably entirely corresponds to the expected "bad" standard for that feature as stipulated by its programmed characteristics. In the affirmative ("bad" sense"), a "bad" feature count is incremented at 616. At this point, it may be desirable to automatically refine 618 what amount to a "bad" characteristic, but this optional and dependent upon whether the system/program has an ability to learn. In the event that an "indeterminate" 620 results arises from the program not being able to clearly identify either a substantially "good" result/feature or a substantially "bad" result/feature, the program is arranged to outline or otherwise highlight 622 the area around the analysed constituent as an "area of interest". The area of interest in appropriately indexed and stored to permit subsequent retrieval, presentation and review. For indeterminate results, neither the good nor bad count is initially incremented, although an indeterminate count record may be incremented on, for example, a per well basis.

Once, a constituent has been identified and appropriate tagged as "good", "bad" or "indeterminate", the process assesses 630 whether all features in the captured field of view of the specific sector have been analysed. If not 632, the program operates to identify 634 (in a systematic way) the next constituent or block of pixels, whereafter the process remains within loop 606 to 634.

If all pixels have been attributed to features and all aggregated pixels considered in a particular sector (step 640), the process assesses 642 whether the entire well or sample has been evaluated. If not 644, the optics are re-aligned (or the table re-positioned) 646 so that the next sector (see well 42 of FIG. 3) can be captured and analysed according to the a process outlined in steps 602 to 644.

In the event that it is determined that an individual well/sample slide has been evaluated (step 648), the process determines 650 whether all the wells/samples have been evaluated for a given set. If not 652, the optics are re-aligned (or the table re-positioned) 654 so that the next well/sample (see FIG. 3) can be imaged and data therefrom captured and analysed according to the process outlined above.

Once all the cells, all the sectors and all the constituents have been analysed and initially assessed (at 660), the process commences a refinement of the "indeterminate" results. Specifically, the processor generates 670 an alert and, on demand, acts to display systematically (or on demand) each "area of interest" identified in steps 622 and 624. The areas of interest 302-304 may be displayed within the context of a sector or entire sample (at the option of the expert scientist/reviewer), with the reviewer able to select display resolution (if needed).

Using the input device (e.g. tablet 218 and stylus 220), the expert user is then able to enter a visually assessed classification 380 of the area of interest. [It is envisioned that the area of interest could contain multiple features that together warrant the assignment of more than one classification of "good" and/or "bad".] If it is determined 382, 384 that the manual classification results in a "good" cell, the good count is incremented 386 for the well. Otherwise, the "bad" count is incremented 388. The present indeterminate response for the specific constituent/feature is then de-emphasised and the results stored/updated in memory 208 or database 214.

A determination 390 is then made as to whether selective (re-)classification of (at least) the indeterminate results has been accomplished. If "yes" 392, a response or exposure curve can be calculated, displayed or otherwise communicated 394 (based on the counts of "good" against "bad" and the prevailing conditions). If "no" 396, the program operates to move 398 to the next (or another un-reviewed) area of interest, with the expert reviewer then prompted to undertake manual classification (per step 380). The process continues until all indeterminate areas have been assessed and classified, whereafter the response or exposure curve can be calculated, displayed or otherwise communicated 394.

It will be understood that the logical flow through the processes may be altered in that certain checks may be implemented according to a different schedule, with the process flow of FIG.6 therefore being merely exemplary. For example, as will be understood, process executions that may be scheduled differently generally relate to assessing whether a complete sample has been analysed or the nature of the sample, rather than the way in which the assessment is carried out.

Various embodiments of the present invention therefore permit the revision in the accuracy of individual field counts within the context of a well or sample space. The revision process saves time by highlighting marginal results, which can then be accurately categorized to produce a more accurate and more reliable drug-response curve based (initially) on an auto-field count of classifiable reactions or responses.

It will, of course, be appreciated that the above description has been given by way of example only and that modifications in details may be made within the scope of the present invention. For example, whilst an embodiment of the present invention has been described at a cellular level and the micronucleation of such cells at cell division, the analytical system and apparatus of the embodiments of the present invention can be extended quantitatively to analyse tissue degradation in a pathological sense or at other levels (e.g. molecule, system or organism granularities). As will be understood, tissue analysis (for example) would require re-programming of the identification process applied by the computer program to reflect characteristics of healthy cells or tissue or desired results and characteristics that depict areas of interest requiring further expert scrutiny. Similar changes to the identification program would therefore target areas of interest (i.e. those areas that potentially give rise to so-called "false-positive" or "false negative" results) relating to reactions or interactions that cannot be easily attributed to a positive or negative response with respect to the specific sample under initial, first-pass computer classification.

Indeed, it has been recognized that the process and apparatus described herein can be applied to soft tissue pathology, thereby reducing the time for well or slide review by a higher paid clinical pathologist. Soft tissue pathology is the sub-specialty of surgical pathology that deals with the diagnosis and characterization of neoplastic and non-neoplastic diseases of the soft tissues, such as muscle, adipose tissue, tendons, fascia, and connective tissues. Many malignancies of the soft tissues are challenging for the pathologist to diagnose through gross examination and microscopy alone, with the additional tools provided by this invention facilitating effective analysis.

In the context the present invention, the term "dose-response curve" should be considered loosely to extend to different forms of tabulated clinical assessments that, according to embodiments of the present invention, make use of the computer-augmented analysis of samples other than cells in conditions that are not solely determined by the concentration of agonist and antagonist, e.g. sample responses that are proportional or related to another variable such as temperature or applied voltage.

An embodiment may operate to tag, identify and display all cells not identified as "good". This increases the workload, but still concentrates review on those cells likely to be of most interest. To further reduce workload, the computer program (in one particular embodiment) may operate to provide a non-result for the entire sector or well in instances where the ratio of "good" to either "bad" and "indeterminate" produces a results significantly above an EC50 threshold; this implying that lethal toxicity is predominant. This avoids detailed review. In the event that the sum total of indeterminate assessments is higher than the combined "good" and "bad" counts, this is suggestive that the characterization of the assay needs to be refined, e.g. the resolution increased to permit the identification of greater detail within each block of pixels assessed to constituent a feature ripe for analysis.

To reflect the power of this tool in analysis of samples, it is noted that an embodiment of the present invention may capture and analyze areas of interest within images of mechanical devices, rather than wells or slides. By way of example, the process or classifying a region may be applied along edges of a fan blade that has been subjected to influencing external factors, such as heat, pressure and/or potentially corrosive environments. In the same way as a sample in a drug well that has been exposed to a particular chemical, the edge of the exemplary fan blade can be analyzed for pitting or irregular profiling relative to an off-the-shelf pristine fan blade manufactured to stated tolerances. Such analysis may again be an imaging process, such as x-ray analysis (to give one exemplary example). Any pitting or deformation of the edge profile beyond a predefined acceptable limit within unit length/area would thus be classified as a "bad" result and the "bad" count incremented. Similarly, a feature of indeterminate overall dimensions may be flagged by the computer program to permit a technician to inspect and then deterministically classify the feature as "good" or "bad".

It is also contemplated that the process of classification (used to identify areas of interest within a sample) can be learnt from a training set. In this regard, a classifier (such as a suitably programmed microcontroller) can be arranged to interpret areas of interest by applying logic based upon the knowledge learnt from the training set. The automatic classifier therefore modifies its operation based on experience of what constitutes an acceptable isolated, imaged feature within the sample and what is considered by the control algorithm to be suspect and thus an "area of interest".

It will be understood that unless features in any of the particular preferred embodiments are expressly identified as incompatible with one another or the surrounding context implies that they are mutually exclusive and not readily combinable in a complementary and/or supportive sense, the totality of this disclosure contemplates and envisions that specific features of those complementary embodiments can be selectively combined to provide one or more comprehensive, but slightly different, technical solutions.

The nature of the distinguishing feature or attribute of a targeted portion of a sample that renders it either acceptable, rejected or indeterminate can be changed to reflect any suitable measureable and discernible characteristic that can be presented. The use of "blob" analysis and shape profiling are therefore but two of many alternative examples, with other techniques dependent upon the sample under investigation (as will now be understood by the skilled addressee). Aspects of the present invention are therefore not limited to these exemplary analysis/identification techniques, although these examples do serve to demonstrate the invention in exemplary operational environments.

## Claims

1. A method of analyzing a sample, the method comprising:
identifying one or more areas of interest within the sample, each area of interest having a classifiable appearance brought about from the sample's interaction with an external influence under investigation;
classifying (380) each area of interest by automatically resolving and identifying either the existence (388) of an abnormal feature (22) in that area of interest or a lack (386) of any abnormality in that area of interest, an abnormal feature in an area of interest differentiable from that of a control reference unaffected by the external influence by at least one of:
shape;
area;
size;
movement of a feature over time;
change in colour;
change in a feature over time; and
proximity to other resolved features within the area of interest;
counting the incidences of abnormal features within each area of interest; and
presenting (394) an assessment of the effect of the external influence on the sample based at least in part on the count of abnormal features in the areas of interest.

2. The method of analyzing a sample according to claim 1, further comprising:
selectively displaying areas of interest containing abnormal features.

3. The method of analyzing a sample according to claim 2, further comprising:
permitting re-classification of selectable features in such displayed areas of interest to alter the classification of said selectable feature to one of abnormal and acceptable.

4. The method of analyzing a sample according to claim 2, wherein the step of selectively displaying an area of interest includes automatically generating a visual highlight around the selected area of interest.

5. The method of analyzing a sample according to any preceding claim, wherein the presented assessment is generated in response to one of:
a predetermined ratio of abnormal features to unaffected features within one of the area of interest and the sample; and
an absolute count of abnormal features one of the area of interest and the sample.

6. The method of analyzing a sample according to any preceding claim, wherein the sample in a biological sample.

7. The method of analyzing a sample according to any preceding claim, wherein the external influence is a chemical reagent and the assessment is a drug response in the sample.

8. A computer program product arranged or configured to present as a visual output a quantitative analysis of a sample, the computer program product including code that, when run by a processor, is arranged to:
identify and select one or more areas of interest within the sample;
image process each selected area of interest;
automatically resolve features within each selected area of interest to at least one capture image;
classify each feature in each area of interest by automatically resolving and identifying either the existence of abnormality in that feature or a lack of any abnormality therein, wherein classification is based upon an appearance of each of said features as brought about from the sample's interaction with an external influence under investigation and wherein an abnormal feature is differentiable from a control reference unaffected by the external influence by at least one of: shape; area; size; movement of a feature over time; a change in colour; change in a feature over time; and proximity to other resolved features within the area of interest;
count the incidences of abnormal features within each area of interest; and
present as the visual output an assessment of the effect of the external influence on the sample based at least in part on the count of abnormal features in the areas of interest.

9. The computer program product according to claim 8, wherein the code is further configured or arranged to:
selectively display areas of interest containing features having an apparently abnormal appearance.

10. The computer program product according to claim 9, wherein the code is further configured or arranged to:
permit re-classification of selectable features in such displayed areas of interest by allowing alteration of the classification of said selectable feature from abnormal to acceptable and vice versa.

11. The computer program product according to claim 9, wherein the code is further configured or arranged to:
automatically generate a visual highlight around the selected area of interest.

12. The computer program product according to any of claims 8 to 11, wherein the code is further configured or arranged to:
store captured images to produce stored images of a biological sample; and
permit access to and review of said stored images.

13. Apparatus (200, 250) arranged to image and automatically resolve and classify features within a sample, the apparatus comprising:
an imaging system (230, 250) arranged or configured to capture and process, in use, images of features within at least one selectable area of interest within a sample;
a processor (206) arranged or configured:
automatically to resolve and classify features in each area of interest by identifying either the existence of abnormality in that feature or a lack of any abnormality therein, wherein classification is based upon an appearance of each of said features as brought about from the sample's interaction with an external influence under investigation and wherein an abnormal feature is differentiable from a control reference unaffected by the external influence by at least one of:
shape; area; size; movement of a feature over time; a change in colour; change in a feature over time; and proximity to other resolved features within the area of interest;
count the incidences of abnormal features within each area of interest; and
a display (204), responsive to the processor, for presenting as a visual output an assessment of the effect of the external influence on the sample based at least in part on the count of abnormal features in the areas of interest.

14. The apparatus according to claim 13, wherein the processor operates to cause selective display of areas of interest containing features having an apparently abnormal appearance.

15. The apparatus according to claim 14, wherein the processor operates to cause, through a user interface, re-classification of selectable features in said displayed areas of interest, thereby allowing alteration of the classification of said selectable feature from abnormal to acceptable and vice versa.

16. The apparatus according to claim 14, wherein the processor operates automatically to cause generation of a visual highlight around the selected area of interest.

17. The apparatus according to any of claims 13 to 16, wherein the processor operates to:
store captured images to produce stored images of a biological sample; and
permit access to and review of said stored images.

18. The apparatus according to any of claims 13 to 17, wherein the imaging system includes a microscope and the sample is distributed across a plurality of drug wells of a sample tray.

19. The apparatus according to any of claims 13 to 18, wherein a plurality of captured images are merged to produce a composite image relating to at least one feature within an area of interest.

20. The apparatus according to any of claims 13 to 19, wherein the processor generates at least one drug response curve on the display.
